# EUROPÄISCHE PATENTSCHRIFT

(11) **EP 0 540 632 B1**
(45) Veröffentlichungstag und Bekanntmachung des Hinweises auf die Patenterteilung: **04.05.1994**
(21) Anmeldenummer: 91913953.5
(22) Anmeldetag: 25.07.1991
(51) Int. Cl.: G11B 27/00, G11B 23/30, G11B 23/40, G11B 27/11

(54) **ANORDNUNG ZUM ERMITTELN VON INHALTEN VON TON- ODER BILDTRÄGERN, INSBESONDERE COMPACT-DISCS**
DEVICE FOR DETERMINING THE CONTENTS OF SOUND OR IMAGE RECORDINGS, IN PARTICULAR COMPACT DISCS
AGENCEMENT POUR LA DETERMINATION DE CONTENUS DE SUPPORTS DE SONS OU D'IMAGES, EN PARTICULIER DE DISQUES COMPACTS

(30) Priorität: 25.07.1990 DE 4023632; 01.01.1991 DE 4100002; 19.04.1991 DE 4112874
(43) Veröffentlichungstag der Anmeldung: 12.05.1993
(73) Patentinhaber: Fischer, Matthias, D-60325 Frankfurt (DE)
(72) Erfinder: Fischer, Matthias, D-60325 Frankfurt (DE)
(86) Internationale Anmeldenummer: EP9101397
(87) Internationale Veröffentlichungsnummer: WO9202017

(56) Entgegenhaltungen:
- EP-A- 0 377 474
- WO-A-89/07807
- GB-A- 2 062 935
- GB-A- 2 218 081
- US-A- 4 445 147
- PATENT ABSTRACTS OF JAPAN, Band 12, Nr. 271, P 736, Zusammenfassung von JP 63-53772, publ. 8.3.1988
- PATENT ABSTRACTS OF JAPAN, Band 9, Nr. 54, P 340, Zusammenfassung von JP 59-191171, publ. 30.10.1984

## Beschreibung

Eine erfindungsgemäße Anordnung ist insbesondere zum Einsatz in Verkaufsgeschäften gedacht, die Kunden Compact-Discs, Schallplatten, Audio- und Videocassetten und dergleichen anbieten.

In derartigen Geschäften gibt es für den Kunden oft die Möglichkeit, ausgewählte Produkte zum Ermitteln von Inhalten abspielen zu lassen. Dies geschieht mittels üblicher Abspielgeräte - und teilweise durch das Personal, teilweise per Selbstbedienung.

Eine wegen ihrer Selbstverständlichkeit kaum diskutierte Erscheinung ist es, daß der Kunde ständig Produkte scheinbar unmotiviert in die Hand nimmt, sie näher betrachtet und wieder zurückstellt. Der Kunde ist also in gewisser Weise interessiert, tut den Schritt zum Abspielen aber sehr selten. Die Regalfülle erschließt sich dem Kunden nicht, allenfalls durch kleine Verpackungsbilder ohne großen Informations- oder Werbewert. Hinzu kommt, daß das Abspielen per Selbstbedienung immer seltener möglich ist, da dieses den Diebstahl sehr begünstigt - ein großes Problem vor allem in der CD-Branche. Die Hauptnachteile bisheriger Abspielmöglichkeiten:
- Umständlichkeit, Zeitverbrauch und Schwellenangst (Gang zur Theke bzw. zum Abspielgerät, evtl.Fragen, Öffnen der Verpackung, Einlegen, Bedienen, Suchen, spezielle Stelle Abwarten usw.).
- Aufreißen der Originalverpackung, evtl. Beschädigung oder Diebstahl
- Zufällige und nicht repräsentative Vorstellung des Produktes (der Kunde "gerät irgendwo hinein").

Wenn aber nicht abgespielt wird, ist dem Informationsbedürfnis des Kunden nicht entsprochen, und werden Verkaufsgelegenheiten verpaßt.

Als nächstliegender Stand der Technik seien die Anmeldeschriften US-A-4 445 147, GB-A-2 062 935 und GB-A-2 218 081 gewürdigt.

Es werden dort Geräte beschrieben, die Elemente besitzen, deren sich auch die vorliegende Erfindung bedient.

So wird auch bei diesen Geräten mit Computereinsatz gearbeitet, und es werden Inhaltsteile von zum Kauf angebotenen Tonträgern wiedergegeben.

Allerdings sind alle diese Geräte als speziell ausgeformte Musikboxen zu bezeichnen, die vom Kunden über Tastaturen bedient werden müssen. Die Geräte sind damit dazu angetan, als "Zusatzgerät" in einem Geschäft aufgestellt zu werden, und nicht, etwa dem traditionellen Abspielen Konkurrenz zu machen. Demgemäß trifft man solche Musikboxen in Plattengeschäften nur bisweilen an, und dann etwa nur für die Titel der Hitparade.

Das zentrale Element der vorliegenden Erfindung ist dagegen der Einsatz des Sensorsystems, das "flächendeckend" über die Produktverpackungen wirkt. Hieraus ergeben sich alle beschriebenen Vorteile.

Die Aufgabe der Erfindung ist es, dem Informationsbedürfnis der Kunden zu entsprechen, und die Nachteile des bekannten Abspielens zu vermeiden.

Die Erfindung löst diese Aufgabe mit einer speziellen Anordnung nach den Ansprüchen 1 und 24, die mittels eines vom Kunden zu bedienenden Sensorsystems wirkt.

Mit der Erfindung lassen sich wesentliche Vorteile erzielen. Und zwar sowohl vom Kunden, als auch vom Handel bzw. Produzenten aus gesehen:

### Information, schnell und komfortabel:

Die Erfindung verhilft dem Kunden "mit einem Handgriff" zu einer Inhaltsvorstellung ihn interessierender Ton- oder Bildträger. Beispielsweise muß der Kunde nur eine in ihrer Verpackung verbleibende Compact-Disc an einem Sensorbereich vorbeiführen - und kann schon deren repräsentative Inhaltsvorstellung hören. Diese wird im Originalmedium, hier also "Audio", und in Originalqualität wiedergegeben. Es handelt sich damit nicht um etwaige Zusatzinformationen zum Produkt, wie z.B. durch das Verpackungsheft bei Compact-Discs, sondern um eine wirkliche "Probenutzung" des Produktes, nämlich der Musik. So präsentieren sich die Produkte dem Kunden in einer neuartigen Sichtbarkeit. Damit ergeben sich auch neue Vergleichsmöglichkeiten; die Möglichkeit, zu Suchen und zu Finden (z.B.eines Stückes aus dem Radio); die Bewahrung vor Fehlkäufen.

In Testversuchen hat sich ein Vorteil der Erfindung als besonders wertvoll herausgestellt:

Ein Kunde hört sich damit gerne auch in ihm unbekanntere Musikgebiete ein (z.B. in die, die sich ihm vorher nur durch Opuszahlen erschlossen).

### Unterhaltungswert:

Kunden honorieren nicht nur die zweckerfüllenden, sondern auch die emotionalen Qualitäten des Einkaufens.

Hierauf beziehen sich der "spielerische Reiz" der Erfindung ("Der Kunde will etwas anfassen"), sowie der "Erlebniswert" (Anhören).

### Umsatzsteigerung:

- Musik, meist der eigentliche Verkaufsgegenstand, bewirkt eine hohe emotionale Ansprache. D.h., hören Kunden sich ein Produkt an, ist die Kauflust und -wahrscheinlichkeit wesentlich höher, als bei einer bloßen Betrachtung der Verpackung.
- Die Inhaltsvorstellung kann aus den interessantesten bzw. den aus der Werbung bekannten Stellen des Produkts bestehen, das Produkt also positiv darstellen.
- Die Attraktivität der Inhaltsvorstellung betrifft auch die sonst erfolgsmindernden kleinen Verpackungsgrößen.
- Durch die obig beschriebene Möglichkeit, sich ohne Aufwand z.B. auch in unbekanntere Gebiete einzuhören, ergeben sich neue Käufergruppen.
- Insbesondere für die Hauptzielgruppe der Unterhaltungs-Branche ist die Unterstützung des "Anfass- und Spieltriebes" durch die Erfindung der Auslöser, sich mehr Produkte anzuhören. Damit erhöht sich die Zahl der Verkaufsgelegenheiten.

### Günstige Realisierung:

Die Erfindung ist zum einen baulich einfach.

Zum Anderen: Erfahrungsgemäß ist es schwierig und investitionsintensiv, Innovationen durchzusetzen, die sich gegen aufgebaute Strukturen wenden. Die vorliegende Erfindung dagegen erweitert die bestehenden, ohne z.B. Verpackungen, Verkaufsregale, Werbung oder Produkte ändern zu müssen.

### Marketingdaten:

Als Zusatznutzen ermöglicht die Erfindung die einfache Speicherung der Wiedergabevorgänge. D.h., es fallen genaue Daten ab, wie oft Kunden welche Produkte in die Hand genommen und in den Sensorbereich gebracht haben. Besonders im Vergleich mit der dann tatsächlich verkauften jeweiligen Anzahl ergeben sich neuartige Analysegrundlagen, um Werbung, Produkt, Verpackung oder Produktanordnung zu verbessern.

### Diebstahl und Originalverpackung:

Mit der Erfindung können die Produkte abgespielt werden, ohne das Produkt selbst auszupacken. Dies erhält die Originalverpackung und verhindert die durch das Herausnehmen provozierten Diebstähle. Ohne Funktionseinschränkung der Erfindung können sogar bloße Verpackungen ausgestellt werden, womit Diebstahl völlig verhindert ist.

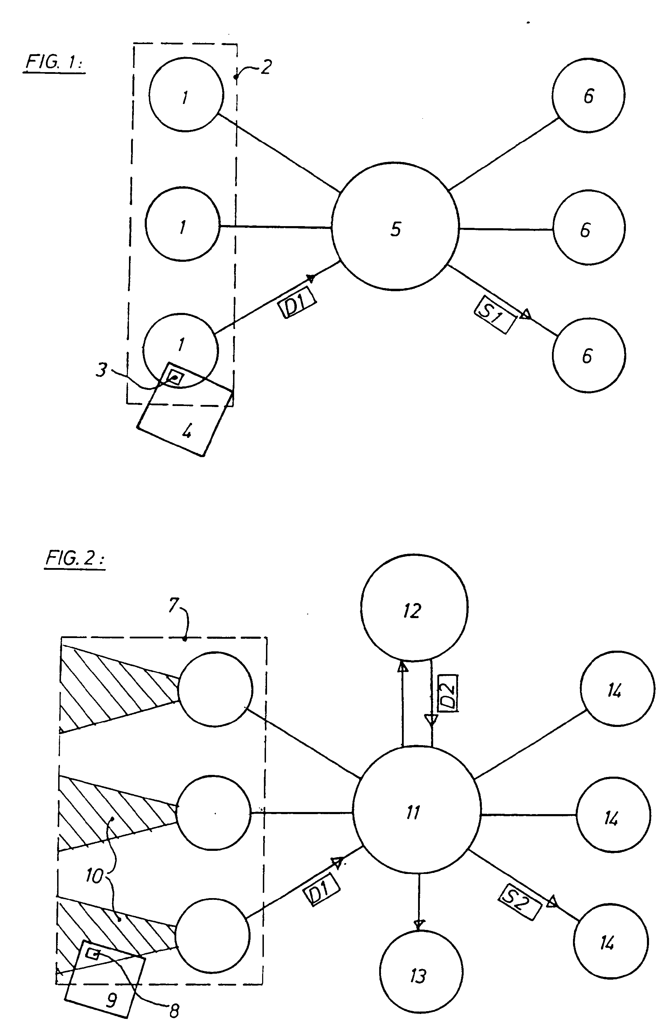

Im Folgenden seien Ausführungsbeispiele der Erfindung näher beschrieben. Es zeigen
Fig.1:
   Bei einer Ausführungsform der Erfindung sind spezielle elektromagnetische oder laseroptische Abtastgeräte(1) Bestandteile eines Sensorsystems(2). Die Geräte reagieren auf kleine Datenträger(3), die als eine Art Etikett an der Produktverpackung(4) angebracht sind. Hält nun ein Kunde ein Produkt mit Verpackung an ein Abtastgerät, wird der kleine Datenträger abgetastet. Dieser enthält die Daten der wiederzugebenden Inhaltsteile. Die Inhaltsteile kommen also nicht von den Ton- oder Bildträgern selbst, sondern von einem gesonderten Speicher, hier als Einzelspeicher ausgebildet. Die Inhaltsteile bestehen z.B aus drei bis vier Anspielungen interessanter Stellen wichtiger Stücke, oder auch nur aus einer des "Titelstückes". Die besonders vorteilhafte Zeitdauer dieser Inhaltsvorstellung liegt etwa bei 30 bis 60 Sekunden. Eventuell können auch z.B kleine zusätzliche Werbeinhalte mit abgespielt werden.
   Die abgetasteten Inhaltsteile-Daten(D1) werden von einer Verarbeitungseinheit(5) in Signale (S1) umgewandelt und über i eine Wiedergabeeinheit mit Lautsprecher oder Kopfhörer(6) wiedergegeben. Dabei sind letztere jeweils den entsprechenden Abtastgeräten(1) zugeordnet, was beim Bestehen mehrerer Geräte zur Identifikation wichtig ist. Für Kunden leicht verständlich ist es, wenn die Abtastgeräte direkt an den Kopfhörern bzw. deren Kabeln befestigt sind. Vorteilhaft ist es auch, drahtlose Kopfhörer einzusetzen, die die Bewegungsfreiheit des Kunden erhöhen. Die Zuordnung zum jeweiligen Sensorbereich findet dann ebenfalls drahtlos statt, z.B. über entsprechende Codebefehle.
   Die unter Fig.1 beschriebene Ausführungsform hat den Vorteil der einfachsten Logistik. Das heißt insbesondere, eine laufende Anpassung an Neuerscheinungen würde automatisch durch die produzentenseitige Etikettierung geschehen.
Fig.2:
   Nach einer weiteren Ausführungsform der Erfindung tastet das Sensorsystem(7) nicht die Daten der wiederzugebenden Inhaltsteile ab, sondern ein sich auf der jeweiligen Verpackung befindendes Erkennungsmerkmal(8). Das vereinfacht das Sensorsystem, und ermöglicht, daß die Produkte(9) nur näherungsweise und berührungslos in Sensorbereiche(10) gebracht werden müssen; beispielsweise, wenn als Erkennungsmerkmale(8) Etiketten eingesetzt werden, die jeweils nur eine bestimmte Wellenlänge reflektieren. Auch können als Erkennungsmerkmale(8) Barcodes (die auf der Verpackung sogar schon vorhanden sind) mit einer Reihe von Barcode-Ablesestiften als Sensorsystem(7) eingesetzt werden.
   Es bestehen hier Relationen zu den bekannten "Scannerkassen". Allerdings mit dem wesentlichen erfindungsgemäßem Unterschied, daß bei der Erfindung zur "Probenutzung" Teile des Produktinhalts selbst wiedergegeben werden. Bei den Scannerkassen hingegen werden nur Produktzusätze, wie Preis, Klassifikation oder Lagerbestandsinformation verwendet.
   Die vom Sensorsystem ermittelten Erkennungsmerkmal-Daten (D1) werden nun von einer Verarbeitungseinheit(11) aufgenommen. Sie ordnet ihnen eine Stelle in einem gesonderten, d.h., nicht durch die jeweiligen Ton- oder Bildträger selbst gebildeten, Speicher(12) zu, auf dem die Daten der wiederzugebenden Inhaltsteile niedergelegt sind. Die jeweiligen Inhaltsteile-Daten(D2) werden aufgenommen, in Signale(S2) umgewandelt, und wiedergegeben. Zur digitalen Speicherung kann der Speicher beispielsweise aus speziell "zusammengeschnittenen" Compact-Discs bzw. "CD-ROMs" in üblichen Laufwerken bestehen. Jede von ihnen kann Hunderte Inhaltsvorstellungen in Digitalqualität tragen.
   Eine Protokollspeichereinrichtung(13) hält die Wiedergabevorgänge zur Lieferung von Analysedaten fest.
   Lautsprecher oder Kopfhörer(14) sind auch hier dem jeweiligen Sensor zur Identifikation zugeordnet.
   Die unter Fig.2 dargestellte Ausführung kommt mit anspruchsloser Gerätetechnik aus und ermöglicht den ergonomischsten Ablauf, insbesondere, wenn das angesprochene Erkennungsmerkmal bzw. -gerät schon auf "Näherung" reagiert.
Fig.3:
   Den Aufbau eines erfindungsgemäßen Speichers(15), ausgeführt als aktualisierbarer Massenspeicher:
   Er besteht aus den Komponenten Datenerfassungseinrichtung (16), Datenschreibeinrichtung(17) und Speicherträgereinheit(18) mit darin enthaltenen beschriebenen Speicherträgern(19). Die Datenerfassungseinrichtung(16) wird z.B. durch ein Leselaufwerk gebildet. Die Daten der zu speichernden bzw. wiederzugebenden Inhaltsteile werden dann folgendermaßen geladen:
   -- a) Speziell erstellte Speicherträger werden eingelegt und abgelesen. Z.B. bei Musikanwendung CD-ROMs mit zusammengeschnittenen, übergangslosen "Jingles" aus mehreren Inhaltsteilen der Tonträger. Beispielsweise würde ein Vertreter mit einem "Koffer voller CD-ROMs" dem Massenspeicher eines Verkaufsgeschäftes die jeweils gewünschten Inhalte überspielen.
   -- b) Ohne jede Verzögerung kann die Aktualisierung bzw.
      Erstellung des Speicherinhalts folgendermaßen vorgenommen werden (in der Zeichnung dargestellt): Die originalen Ton- oder Bildträger(20) werden jeweils selbst für eine gewisse Zeit eingelegt, und davon die zu speichernden bzw. wiederzugebenden Inhaltsteile abgelesen. Hierzu bestehen Steuerdaten(21), die die zu verwendenden Inhaltsteile, d.h. deren Lage und Umfang, spezifizieren. Die Steuerdaten(21) sind den jeweiligen Ton- oder Bildträgern(20) beigeordnet und werden über eine Einleseeinrichtung gelesen. Hier ist diese Einleseeinrichtung identisch mit der Datenerfassungseinrichtung(16), wobei sich die Steuerdaten(21) auf einer Hilfsspur des Ton- oder Bildträgers befinden. Andere Möglichkeiten sind, die Steuerdaten von einem Barcode, einer elektromagnetischen Spur zu lesen, oder per Datenfernübertragung oder Tastatureingabe übertragen.
   -- c) Datenerfassung per Datenfernübertragung von einer Zentrale in die verschiedenen Verkaufsgeschäfte. Dieser Weg ist an sich der einfachste, bedingt aber entsprechend qualifizierte Datenleitungen.

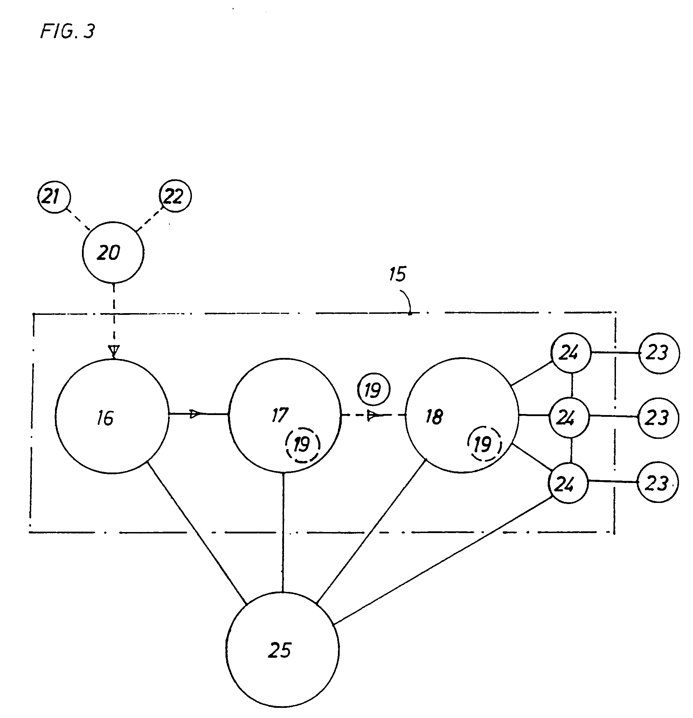

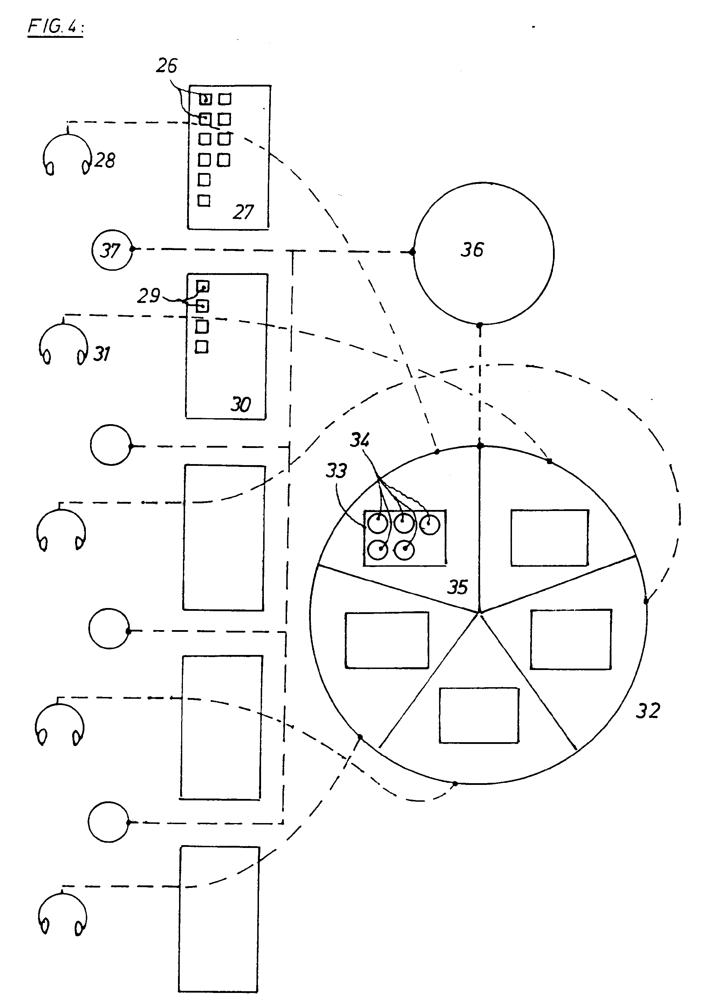

   Durch die Datenschreibeinrichtung(17) werden die erfaßten Daten in die Speicherträger(19) geschrieben. Bei einem magnetooptischen Speicher ist die Datenschreibeinrichtung ein Laserschreibgerät. Nach dem Schreibvorgang werden die beschriebenen Speicherträger(19) , z.B. "Write-CDs", in die Speicherträgereinheit, z.B. CD-Laufwerke(18) übergeführt.
   Vorteilhafterweise wird bei der Erstellung bzw. Aktualisierung des Massenspeichers zur "automatischen" Definition der Ton- oder Bildträger(20) dasselbe Erkennungsmerkmal (22) verwandt, das später, über das Sensorsystem, beim Abruf- bzw. Wiedergabevorgang zur Identifikation der Ton- oder Bildträger dient. Die Zuführung des Erkennungsmerkmals(22) über das Sensorsystem kann so ebenfalls bei Definition und bei Identifikation gleich sein.
   Eine Flexibilisierung des gesamten Speichersystems wird erzielt, wenn zwischen Speicher(15) und Wiedergabeeinheit(23) mehrere Zwischenspeicher(24) bestehen. Sie erhalten die Daten aus dem Massenspeicher(15) "schnell", und geben sie "langsam" an die Wiedergabeeinheit(23) weiter.
   Die Koordination sämtlicher obiger Vorgänge übernimmt die Verarbeitungseinheit(25), kostengünstig gebildet durch einen Personal-Computer.
Fig.4:
   Die obig beschriebene Zwischenspeichertechnik ist bei den großen Datenmengen momentan noch sehr teuer. Ein anfangs gravierendes Problem war es somit, daß der nur einmal vorhandene Speicher bei kostengünstigem Zugriff in Echtzeit solange blockiert wäre, wie ein Kunde z.B. Musik hören würde. Die erfindungsgemäße Lösung: Der Speicher, die Menge der im Verkaufsgeschäft angebotenen Ton- oder Bildträger und die Wiedergabeeinheit sind in einander entsprechende räumliche Sektoren aufgeteilt. Ein Ausführungsbeispiel:
   - CD's "POP von A bis E"(26) befinden sich in einem Regalsektor(27), dem ein Kopfhörer(28) und ein Teil des Sensorsystems(37) zugeordnet ist. CD's "POP von F bis J"(29) in einem zweiten Regalsektor(30) mit eigenem Kopfhörer(31) usw.
   - Auch der Speicher(32) besitzt diese Aufgliederung. Er besteht hier aus handelsüblichen CD-Playern bzw. CD-Wechselgeräten(33) mit als Speicherträgern darin enthaltenen Speicher-CDs(34). Diese können wie unter Fig.3 beschrieben, im Speicher(32) selbst erstellt worden sein, oder auch fertig, z.B. von außerhalb zugesandt werden.

   Eine Speicher-CD(34) enthält z.B. alle Zusammenschnitte von "POP A". Der dem einen Regalsektor(27) entsprechende Spei-cherteil(35) "POP A bis E" wird dann von fünf Speicher-CD's (34) in einem CD-Wechselgerät(33) gebildet.
   Obwohl der Speicherinhalt insgesamt nur einmal archiviert ist, können somit mehrere Kunden, die vor den unterschiedlichen Regalsektoren stehen, mehrere Speicherteile in Anspruch nehmen, ohne sich zu blockieren.
   Die koordinierende Verarbeitungseinheit(36) weist dabei mehrere Zuordnungsebenen auf. Davon ist eine für die Zuordnung bestimmter Speicherträger(34) und eine weitere für die Zuordnung bestimmter Stellen auf den Speicherträgern zuständig. Einzelne Teile der Verarbeitungseinheit können auch von der z.B. in industriellen CD-Playern enthaltenen Datenverarbeitungstechnik gebildet werden.

Ein weiteres Prinzip ist es, den Speicher wesentlich größer auszubilden, als die Gesamtheit aller abzurufenden Inhaltsteile. Dazu ein Ausführungsbeispiel:

In den Wechselgeräten befinden sich statt der speziell aufgenommenen die den angebotenen entsprechenden Original-CD's. Über die Verarbeitungseinheit werden dann jeweils besonders geeignete, vorher bestimmte Stellen abgerufen, weite Teile der jeweiligen CD bleiben unberücksichtigt.

Diese Ausführung erfordert zwar eine relativ große Anzahl von CD-Magazinen. Dafür müssen aber beim Erscheinen neuer Produkte nur normale" Exemplare eingelegt, und die wiederzugebenden Inhaltsteile spezifiziert werden.

Schließlich sei noch eine vorteilhafte Speicherausbildung angeführt - realisierbar allerdings erst in einigen Jahren:

Die Verwendung von Halbleiterspeichern("Speicherchips").

Beispielsweise kann dann jeweils mit Erscheinen eines neuen Produktes dem Verkaufsgeschäft ein fest programmierter Speicherchip mitgesandt werden, der die Daten der Inhaltsteile enthält, und der einfach in den Speicher eingesteckt würde.

## Patentansprüche

1. Anordnung zum Ermitteln von Inhalten von Ton- oder Bildträgern, insbesondere Compact-Discs,
- eine Verarbeitungseinheit(11) aufweisend, die Daten verarbeitet oder in Signale umwandelt,
- einen Speicher(12) aufweisend, der Inhaltsteile dieser Ton- oder Bildträger enthält, wobei dieser Speicher von den jeweiligen Ton- oder Bildträgern selbst gesondert ist,
- eine Wiedergabeeinheit(14) aufweisend, die einen oder mehrere Inhaltsteile der genannten Ton- oder Bildträger wiedergeben kann,
**dadurch gekennzeichnet**,
daß ein vom Benutzer zu bedienendes Sensorsystem(7) besteht, welches auf Teile(8) der jeweiligen Ton- oder Bildträgerverpackungen(9) oder andere den jeweiligen Ton- oder Bildträgern zugeordnete Zusätze reagiert, so daß mittels Verarbeitungseinheit(11) und Wiedergabeeinheit(14) Inhaltsteile der Ton- oder Bildträger aus dem Speicher(12) wiedergegeben werden.

2. Anordnung nach Anspruch 1,
**dadurch gekennzeichnet**,
daß das Sensorsystem(7) ein oder mehrere Geräte mit optischer oder elektromagnetischer Abtasteinrichtung aufweist, insbesondere Barcode-Ablesestifte, oder solche Einrichtungen, die berührungslos in einem größeren Bereich bzw. Abstand funktionieren.

3. Anordnung nach einem oder-mehreren der vorhergehenden Ansprüche, **dadurch gekennzeichnet**,
daß die Teile der Verpackung bzw. die Zusätze, auf die das Sensorsystem reagiert, fest, beweglich oder wie ein Etikett an der Verpackung angebrachte Datenträger(3) oder Erkennungsmerkmale(8) sind, insbesondere laseroptisch ablesbare Teile hoher Speicherdichte, Magnetstreifen, Barcodes oder wellenreflektierende Teile.

4. Anordnung nach einem oder mehreren der vorhergehenden Ansprüche, **dadurch gekennzeichnet**,
daß die Verarbeitungseinheit(11) ein Zuordner ist, der den vom Sensorsystem(7) ermittelten Daten im Speicher(12) eine Stelle zuordnet.

5. Anordnung nach Anspruch 4,
**dadurch gekennzeichnet**,
daß die Verarbeitungseinheit(11) mehrere Zuordnungsebenen aufweist, deren eine die Zuordnung bestimmter Speicherträger im Speicher(12), und deren weitere die Zuordnung bestimmter Stellen auf den Speicherträgern übernimmt.

6. Anordnung nach einem oder mehreren der vorhergehenden Ansprüche, **dadurch gekennzeichnet**,
daß die Verarbeitungseinheit(5) ein Umwandler ist, der die vom Sensorsystem(2) bzw. aus dem Speicher(12) ermittelten Daten(D1) in Signale(S1,S2) umwandelt und diese an die Wiedergabeeinheit(6,14) weiterleitet.

7. Anordnung nach einem oder mehreren der vorhergehenden Ansprüche, **dadurch gekennzeichnet**,
daß die Wiedergabeeeinheit(6) Kopfhörer oder Lautsprecher aufweist, denen jeweils Abtasteinrichtungen des Sensorsystems zugeordnet sind, wobei insbesondere jeweils an Kopfhörern bzw. Kopfhörerkabeln Abtasteinrichtungen des Sensorsystems befestigt sind.

8. Anordnung nach einem oder mehreren der vorhergehenden Ansprüche, **dadurch gekennzeichnet**,
daß die Wiedergabeeinheit(6) drahtlose Kopfhörer aufweist, wobei dann zwischen Kopfhörer und Sensorsystem eine ebenfalls drahtlos funktionierende Zuordnungseinheit besteht.

9. Anordnung nach einem oder mehreren der vorhergehenden Ansprüche, **dadurch gekennzeichnet**,
daß die wiederzugebenden Inhaltsteile Ausschnitte wichtiger oder charakteristischer Stücke der Ton- oder Bildträger sind, und insbesondere eine halbe bis ganze Minute Dauer aufweisen.

10. Anordnung nach einem oder mehreren der vorhergehenden Ansprüche, **dadurch gekennzeichnet**,
daß die wiederzugebenden Inhaltsteile durch zusätzliche Teile ergänzt sind, die insbesondere einen Werbeinhalt aufweisen.

11. Anordnung nach einem oder mehreren der vorhergehenden Ansprüche, **dadurch gekennzeichnet**,
daß der Speicher, von dem die Inhaltsteile abgerufen werden, von an den Ton- oder Bildträgerverpackungen befindlichen Einzelspeichern(3) in Form optischer, elektromagnetischer Datenträger oder Halbleiterspeicher gebildet wird.

12. Anordnung nach einem oder mehreren der vorhergehenden Ansprüche, **dadurch gekennzeichnet**,
daß der Speicher, von dem die Inhaltsteile abgerufen werden, aus einem mit der Verarbeitungseinheit verbundenen, aktualisierbaren Massenspeicher(12) besteht.

13. Anordnung nach einem oder mehreren der vorhergehenden Ansprüche, **dadurch gekennzeichnet**,
daß der Speicher(15) folgendermaßen ausgebildet ist:
- es besteht zum Aktualisieren bzw. Erstellen des Speicherinhalts eine Datenerfassungseinrichtung(16);
- die Datenerfassungseinrichtung ist zum Einbringen von Speicherträgern(20) oder zum Datenfernempfang ausgebildet;
- die Datenerfassungseinrichtung ist mit einer Datenschreibeinrichtung(17) verbunden, welche die erfaßten Daten in die Speicherträger(19) des Speichers schreibt;
- es besteht eine Speicherträgereinheit(18), welche die beschriebenen Speicherträger (19) enthält,
- die Datenerfassungs-, die Datenschreibeinrichtung und die Speicherträgereinheit sind mit der Verarbeitungseinheit(25) verbunden.

14. Anordnung nach Anspruch 13,
**dadurch gekennzeichnet**,
daß die in die Datenerfassungseinrichtung einzubringenden Speicherträger(20) die jeweiligen Ton- oder Bildträger selbst sind, von denen nur die wiederzugebenden Inhaltsteile erfaßt bzw. verwendet werden, wobei diese Inhaltsteile per Tastatur oder per Steuerdaten(21) spezifiziert werden.

15. Anordnung nach Anspruch 14,
**dadurch gekennzeichnet**,
daß die Steuerdaten(21), die die wiederzugebenden Inhaltsteile spezifizieren, den jeweiligen Ton- oder Bildträgern (20) bzw. deren Verpackungen beigefügt sind oder zugeordnet werden - insbesondere auf einem Barcode, auf einem Datenblatt, auf einer elektromagnetischen Spur, auf einer Hilfsspur oder per Datenfernübertragung,
und daß eine Erfassungseinrichtung besteht, die diese Steuerdaten der Verarbeitungseinheit(25) zuführt.

16. Anordnung nach einem oder mehreren der vorhergehenden Ansprüche, **dadurch gekennzeichnet**,
daß zwischen Speicher(15) und Wiedergabeeinheit(23) mehrere Zwischenspeicher(24) bestehen, die - gesteuert von der Verarbeitungseinheit(25) - Daten vom Speicher erhalten und sie an die Wiedergabeeinheit weitergeben.

17. Anordnung nach einem oder mehreren der vorhergehenden Ansprüche, **dadurch gekennzeichnet**,
daß das Erkennungsmerkmal (22), welches zur Definition des jeweiligen Ton- oder Bildträgers(20) bei der Erstellung bzw. Aktualisierung des Speicherinhalts dient, identisch ist mit dem(8), auf welches das Sensorsystem(7) beim Wiedergabevorgang reagiert.

18. Anordnung nach einem oder mehreren der vorhergehenden Ansprüche, **dadurch gekennzeichnet**,
daß der Speicher optische bzw. magnetooptische Speicherträger aufweist, insbesondere durch speziell dafür aufgenommene Compact-discs bzw. "CD-ROMs", in ihren weitgehend handelsüblichen Laufwerken.

19. Anordnung nach einem oder mehreren der vorhergehenden Ansprüche, **dadurch gekennzeichnet**,
daß Sektoren bestehen, in die zum einen der Speicher aufgeteilt ist(35), in die zum anderen die im Verkaufsraum angebotene Menge der Ton- und Bildträger bzw. deren Verpackungen aufgeteilt ist(27), und in die die Wiedergabeeinheit gegliedert ist(28).

20. Anordnung nach Anspruch 19,
**dadurch gekennzeichnet**,
daß die Sektoren(35) des Speichers jeweils ein oder mehrere Laufwerke(33) aufweisen, speziell CD-Player oder CD-Wechselgeräte mit darin enthaltenen CD's(34).

21. Anordnung nach einem oder mehreren der vorhergehenden Ansprüche, **dadurch gekennzeichnet**,
daß der Speicher(32) im Inhaltsumfang wesentlich größer ist, als die Gesamtheit aller abzurufenden Inhaltsteile, d.h., daß nur bestimmte, durch die Verarbeitungseinheit befohlene Teile abgerufen, weite andere Teile des Speichers aber nicht verarbeitet bzw. wiedergegeben werden.

22. Anordnung nach einem oder mehreren der vorhergehenden Ansprüche, **dadurch gekennzeichnet**,
daß der Speicher(12) Halbleiterspeicher aufweist, die jeweils Daten der abrufbaren Inhaltsteile enthalten, und die insbesondere austausch- bzw. erweiterbar sind.

23. Anordnung nach einem oder mehreren der vorhergehenden Ansprüche, **dadurch gekennzeichnet**,
daß eine zusätzliche Protokollspeichereinrichtung(13) besteht, in der die Wiedergabevorgänge zur späteren Auswertung festgehalten werden.

24. Verfahren zum Ermitteln von Inhalten von Ton- oder Bildträgern, bei dem Inhaltsteile der Ton- oder Bildträger von einem gesonderten Speicher(12) genommen und wiedergegeben werden können,
**dadurch gekennzeichnet**,
daß die Ton- oder Bildträger über ein vom Benutzer zu bedienendes Sensorsystem(7) erkannt werden, wobei das Sensorsystem auf Teile(8) der jeweiligen Ton- oder Bildträgerverpackungen(9) oder andere den jeweiligen Ton- oder Bildträgern zugeordnete Zusätze reagiert, so daß Inhaltsteile der Ton- oder Bildträger aus dem Speicher(12) wiedergegeben werden.

## Claims

1. Structure for the determination of the contents of sound or picture carriers, in particular compact discs,
- with a processing unit (11) which processes data or converts it into signals,
- with a memory unit (12) which contains parts of the contents of these sound and picture carriers, whereby this memory unit is separate from the actual sound or picture carrier in question,
- with a playback unit (14), which is able to reproduce one or more of the contents of the sound or picture carrier in question,
**characterized by the fact**
that a sensor system (7), to be operated by the user, exists and which reacts to parts (8) of the packaging of the sound or picture carrier in question (9) or other supplements to the sound or picture carrier so that through the use of the processing unit (11) and the playback unit (14) the parts of the contents of the sound or picture carriers may be reproduced from the memory unit (12).

2. Structure in accordance with claim 1,
**characterized by the fact**
that the sensor system (7) has one or more pieces of equipment with optical or electromagnetic scanning devices, in particular barcode scanner pens, or such contactless appliances which function by scanning a large area and/or distance.

3. Structure in accordance with one or more of the previous claims
**characterized by the fact**
that the parts of the packaging, i.e. the supplements, to which the sensor system reacts are data carriers (3) which are fixed, moveable or attached to the packaging in the form of a label, or are identification criteria (8), and in particular parts of high storage density which may be read via laser optics, magnetic strips, barcodes or parts which reflect waves.

4. Structure in accordance with one or more of the previous claims
**characterized by the fact**
that the processing unit (11) is an allocator which allocates a position to the data in the memory (12) determined by the sensor system (7).

5. Structure in accordance with claim 4,
**characterized by the fact**
that the processing unit (11) has several allocation levels, one of which then takes over the allocation of specific storage media in the memory (12) and others which take over the allocation of specific positions on the storage media.

6. Structure in accordance with one or more of the previous claims
**characterized by the fact**
that the processing unit (5) is a converter unit which converts the data (D1) from the sensor system (2) and/or the memory unit (12) into signals (S1, S2) and routes these signals to the playback unit (6, 14).

7. Structure in accordance with one or more of the previous claims
**characterized by the fact**
that the playback unit (6) has headphones or loudspeakers to which scanning devices of the sensor system are allocated, whereby in particular scanning devices of the sensor system are attached to the headphones and/or headphone cables.

8. Structure in accordance with one or more of the previous claims
**characterized by the fact**
that the playback unit (6) has wireless headphones, whereby there is then a wireless allocation unit between the headphones and the sensor system.

9. Structure in accordance with one or more of the previous claims
**characterized by the fact**
that the parts of the contents to be reproduced are excerpts from the sound or picture carrier of a significant or characteristic nature, and in particular that they are of a duration of 30 seconds to one minute.

10. Structure in accordance with one or more of the previous claims
**characterized by the fact**
that the contents to be reproduced are complemented by further elements which are, in particular, of an advertising nature.

11. Structure in accordance with one or more of the previous claims
**characterized by the fact**
that the memory from which the contents are to be retrieved consists of individual memory units (3) in the form of optical or electromagnetic data carriers or semiconductor memory units to be found on the packaging of the sound and picture carriers.

12. Structure in accordance with one or more of the previous claims
**characterized by the fact**
that the memory unit from which the parts of the contents are retrieved consists of a mass storage device which may be up-dated (12) and which is linked to the processing unit.

13. Structure in accordance with one or more of the previous claims
**characterized by the fact**
that the memory unit (15) is structured as follows:
- there is a data collection facility (16) for the up-dating and/or creation of the contents of the memory unit;
- the data collection facility is structured for the plugging in of storage media (20) or remote reception of data;
- the data collection facility is linked to a data recording facility (17) which writes the collected data into the storage media (19) of the memory unit;
- there is a storage media unit (18) which contains the written storage media (19);
- the data collection unit, the data recording facility and the storage media unit are linked to the processing unit (25).

14. Structure in accordance with claim 13,
**characterized by the fact**
that the storage media (20) to be plugged into the data collection facility are the sound and picture carrier themselves, from which only the contents are to be input and/or utilized, whereby the parts of the contents are to be specified via keyboard or via control data (21).

15. Structure in accordance with claim 14,
**characterized by the fact**
that the control data (21) which specify the contents to be reproduced are included with or assigned to the sound or picture carrier in question (20) and/or its packaging - in particular in a barcode, on a data sheet, on an electromagnetic track, on an auxiliary track or by remote data transfer, and that there is a data collection facility which supplies these control data to the processing unit (25).

16. Structure in accordance with one or more of the previous claims
**characterized by the fact**
that there are a number of buffers (24) between the memory unit (15) and the playback unit (23); these buffers - controlled by the processing unit (25) - receive data from the memory unit and pass it on to the playback unit.

17. Structure in accordance with one or more of the previous claims
**characterized by the fact**
that the identification criterion (22), which serves to define the sound or picture carrier in question (20) when creating and/or up-dating the memory contents, is identical with the criterion (8) to which the sensor system (7) reacts during the reproduction process.

18. Structure in accordance with one or more of the previous claims
**characterized by the fact**
that the memory unit has optical or magneto-optical storage media, in particular in the form of specially recorded compact discs or "CD-ROMs" in their generally commercially available drives.

19. Structure in accordance with one or more of the previous claims
**characterized by the fact**
that sectors exist into which, on the one hand, the memory unit is divided (35), and on the other, into which the amount of sound and picture carriers and their packaging to be sold in the place of sale is divided (27), and into which the playback unit is structured (28).

20. Structure in accordance with claim 19
**characterized by the fact**
that each sector (35) of the memory unit has one or more drives (33), especially CD players or CD juke boxes with CDs therein (34).

21. Structure in accordance with one or more of the previous claims
**characterized by the fact**
that the memory (32) is clearly larger in contentual scope than the total of all the parts of the contents to be retrieved, i.e. that only specifically chosen parts are retrieved by the processing unit, while other parts of the memory are not processed or reproduced.

22. Structure in accordance with one or more of the previous claims
**characterized by the fact**
that the memory unit (12) contains semi-conductor memories which each contain data of the retrievable contents and which, in particular, are exchangeable and/or expandable.

23. Structure in accordance with one or more of the previous claims
**characterized by the fact**
that a further protocol memory facility (13) exists in which the reproduction processes are recorded for later evaluation.

24. Process for the determination of the contents of sound or picture carriers, whereby parts of the contents of the sound or picture carriers may be taken from a separate memory unit (12) and reproduced,
**characterized by the fact**
that the sound or picture carrier may be recognised using a sensor system (7) to be operated by the user, whereby the sensor system reacts to parts (8) of the packaging of the sound or picture carrier in question (9) or other supplements allocated to the sound or picture carrier in question, so that parts of the contents of the sound or picture carrier may be reproduced from the memory (12).

## Revendications

1. Disposition permettant de déterminer le contenu de supports de son ou d'images, en particulier de compact-discs,
- présentant une unité de traitement (11) qui traite les données ou les transforme en signaux,
- présentant une mémoire (12), comprenant des parties du contenu de ces supports de son ou d'image; cette mémoire est elle-même séparée des supports respectifs de son ou d'images,
- présentant une unité de reproduction (14) qui est capable de reproduire une ou plusieurs parties du contenu des supports de son ou d'image mentionnés,
**caractérisée par le fait**
qu'il existe un système de capteurs (7) devant être manié par l'utilisateur et qui réagit par rapport à certaines parties (8) de l'emballage (9) des supports de son ou d'image respectifs ou à d'autres accessoires affectés aux supports de son ou d'images respectifs, de façon à ce qu'au moyen de l'unité de traitement (11) et de l'unité de reproduction (14), des parties du contenu des supports de son ou d'images soient reproduites à partir de la mémoire (12).

2. Disposition suivant la revendication 1,
**caractérisée par le fait**
que le système de capteurs (7) présente un ou plusieurs appareils possédant un dispositif de balayage optique ou électromagnétique, en particulier des crayons-lecteurs de code à barres ou des dispositifs fonctionnant sans contact dans une zone assez importante ou encore à une assez grande distance.

3. Disposition suivant une ou plusieurs des revendications ci-dessus mentionnées,
**caractérisée par le fait**
que les parties de l'emballage et les accessoires par rapport auquel réagit le système de capteurs sont des supports de données (3) ou des caractéristiques d'identification appliqués de façon fixe, amovible ou comme une étiquette sur l'emballage, en particulier des pièces de haute densité d'enregistrement lisibles par optique laser, des bandes magnétiques, des codes à barres ou des pièces reflétant des ondes.

4. Disposition suivant une ou plusieurs des revendications ci-dessus mentionnées,
**caractérisée par le fait**
que l'unité de traitement (11) est un allocateur qui attribue une position de mémoire (12) aux données déterminées par le système de capteurs (7).

5. Disposition suivant la revendication 4,
**caractérisée par le fait**
que l'unité de traitement (11) présente plusieurs niveaux d'affectation, le premier se chargeant de l'affectation de certains supports de mémoire dans la mémoire (12) et les suivants de l'affectation de certaines positions sur les supports de mémoire.

6. Disposition suivant une ou plusieurs des revendications ci-dessus mentionnées,
**caractérisée par le fait**
que l'unité de traitement (5) est un convertisseur qui convertit les données (D1) déterminées par le système de capteurs (2) ou recherchées dans la mémoire (12) en signaux (S1.S12) et qui transmet ceux-ci à l'unité de reproduction (6,14).

7. Disposition suivant une ou plusieurs des revendications ci-dessus mentionnées,
**caractérisée par le fait**
que l'unité de reproduction (6) présente des casques ou haut-parleurs, à chacun desquels sont affectés des dispositifs de balayage du système de capteurs; c'est en particulier sur chacun des casques que sont fixés des dispositifs de balayage du système de capteurs.

8. Disposition suivant une ou plusieurs des revendications ci-dessus mentionnées,
**caractérisée par le fait**
que l'unité de reproduction (6) présente des casques sans fil; l'unité d'affectation entre les casques et le système de capteurs fonctionne également sans fil.

9. Disposition suivant une ou plusieurs des revendications ci-dessus mentionnées,
**caractérisée par le fait**
que les parties de contenu devant être reproduites sont des extraits de morceaux importants ou caractéristiques des supports de son ou d'images et durent en particulier entre une demi-minute et une minute entière.

10. Disposition suivant une ou plusieurs des revendications ci-dessus mentionnées,
**caractérisée par le fait**
que les parties de contenu devant être reproduites sont complétées par des parties supplémentaires qui présentent avant tout un contenu publicitaire.

11. Disposition suivant une ou plusieurs des revendications ci-dessus mentionnées,
**caractérisée par le fait**
que la mémoire, à partir de laquelle les parties de contenu sont appellées sélectivement, est constituée de mémoires individuelles (3) sous forme de supports de données optiques ou électromagnétiques ou de mémoires à semi-conducteurs se trouvant sur les emballages des supports de son ou d'images.

12. Disposition suivant une ou plusieurs des revendications ci-dessus mentionnées,
**caractérisée par le fait**
que la mémoire, à partir de laquelle les parties de contenu sont appellées sélectivement, est constituée par une mémoire de masse (12) qu'il est possible d'actualiser et qui est reliée à l'unité de traitement.

13. Disposition suivant une ou plusieurs des revendications ci-dessus mentionnées,
**caractérisée par le fait**
que la mémoire (15) est équipée de la façon suivante:
- il existe un dispositif de saisie des données (16) pour actualiser ou établir le contenu de la mémoire;
- le dispositif de saisie des données est équipé pour la mise en place de supports de mémoire (20) ou la réception de données à distance;
- le dispositif de saisie des données est relié à un dispositif d'écriture de données (17), qui écrit les données saisies dans le support de mémoire (19) de la mémoire;
- il existe une unité de support de mémoire (18), qui comprend les supports de mémoires décrits;
- le dispositif de saisie et d'écriture de données et l'unité de support de mémoire sont reliés à l'unité de traitement (25).

14. Disposition suivant la revendication 13,
**caractérisée par le fait**
que les supports de mémoire (20) devant être placés dans le dispositif de saisie des données sont les supports de son et d'images respectifs, dont seules les parties du contenu devant être reproduites sont saisies et utilisées; ces parties de contenu sont spécifiées au moyen du clavier ou de données de commande (21).

15. Disposition suivant la revendication 14,
**caractérisée par le fait**
que les données de commande (21) qui spécifient les parties de contenu devant être reproduites, sont ajoutées aux supports de son et d'images (20) respectifs ou à leur emballage ou leur sont affectées - en particulier sur un code à barres, une fiche technique, sur une piste électromagnétique, une piste auxiliaire ou par télétransmission de données, et qu'il existe un dispositif de saisie qui transmet ces données de commande à l'unité de traitement (25).

16. Disposition suivant une ou plusieurs des revendications ci-dessus mentionnées,
**caractérisée par le fait**
qu'il existe plusieurs mémoires intermédiaires (24) entre la mémoire (15) et l'unité de reproduction (23), qui, commandées par l'unité de traitement (25) - reçoivent des données de la mémoire et les transmettent à l'unité de reproduction.

17. Disposition suivant une ou plusieurs des revendications ci-dessus mentionnées,
**caractérisée par le fait**
que la caractéristique d'identification (22) servant à la définition des supports de son et d'images respectifs (20) pour l'établissement ou l'actualisation du contenu de la mémoire, est identique à celle (8) par rapport à laquelle réagit le système de capteurs (7) au cours du processus de reproduction.

18. Disposition suivant une ou plusieurs des revendications ci-dessus mentionnées,
**caractérisée par le fait**
que la mémoire présente des supports de mémoire optiques ou magnéto- optiques, en particulier grâce à des compact-discs et des "CD-ROMs" qui ont été enregistrés spécialement à cet effet dans leurs unités d'entraînement identiques dans une large mesure à celles disponibles dans e commerce.

19. Disposition suivant une ou plusieurs des revendications ci-dessus mentionnées,
**caractérisée par le fait**
qu'il existe des secteurs dans lesquels sont subidivés la mémoire d'une part (35), les supports de son et d'images et leurs emballages étant à vendre respectivement (27) et l'unité de reproduction (28) d'autre part aussi.

20. Disposition suivant la revendication 19,
**caractérisée par le fait**
que les secteurs (35) de la mémoire présentent pour chacun une ou plusieurs unités d'entraînement (33), en particulier des lecteurs de CD ou des changeurs de CD contenant des CD (34).

21. Disposition suivant une ou plusieurs des revendications ci-dessus mentionnées,
**caractérisée par le fait**
que la mémoire (32), en ce qui concerne sa capacité, est beaucoup plus grande que le total de toutes les parties de son contenu qui sont appelées sélectivement, c.a.d. que seules des parties déterminées, sont appelées sélectivement sur ordre de l'unité de traitement, mais que d'autres parties de la mémoire ne sont ni traitées, ni reproduites.

22. Disposition suivant une ou plusieurs des revendications ci-dessus mentionnées,
**caractérisée par le fait**
que la mémoire (12) présente des mémoires à semi-conducteurs comprenant chacune des données des parties de contenu qu'il est possible d'appeler sélectivement et qui sont, en particulier, interchangeables respectivement extensibles.

23. Disposition suivant une ou plusieurs des revendications ci-dessus mentionnées,
**caractérisée par le fait**
qu'il existe un dispositif supplémentaire de mémorisation des protocoles (13), dans lequel les opérations de reproduction sont conservées afin d'être exploitées ultérieurement.

24. Méthode permettant de déterminer le contenu de supports de son ou d'images, par laquelle des parties de contenu des supports de son ou d'images peuvent être prises à partir d'une mémoire à part (12) et être 35 reproduites,
**caractérisée par le fait**
que les supports de son ou d'images sont reconnus grâce à un système de capteurs (7) manipulé par l'utilisateur; le système de capteurs réagit par rapport à des parties (8) d'emballages des supports respectifs de son ou d'images ou à d'autres accessoires affectés aux supports de son ou d'images respectifs, de façon à ce que des parties de contenu des supports de son ou d'images puissent être reproduites à partir de la mémoire (12).
